# EUROPÄISCHE PATENTSCHRIFT

(11) **EP 1 137 736 B1**
(45) Veröffentlichungstag und Bekanntmachung des Hinweises auf die Patenterteilung: **09.03.2005**
(21) Anmeldenummer: 99955958.6
(22) Anmeldetag: 06.11.1999
(51) Int. Cl.: C09K 7/02, C09K 7/06, C10M 105/38

(54) **SCHMIERMITTEL FÜR BOHRSPÜLUNGEN**
LUBRICANTS FOR DRILLING FLUIDS
LUBRIFIANT DESTINE A DES LIQUIDES DE FORAGE

(30) Priorität: 17.11.1998 DE 19852971
(43) Veröffentlichungstag der Anmeldung: 04.10.2001
(73) Patentinhaber: Cognis Deutschland GmbH & Co. KG, 40589 Düsseldorf (DE)
(72) Erfinder: MÜLLER, Heinz, D-40789 Monheim (DE); HEROLD, Claus-Peter, D-40822 Mettmann (DE); BONGARDT, Frank, D-40670 Meerbusch (DE); HERZOG, Nadja, D-40699 Erkrath (DE); VON TAPAVICZA, Stephan, D-40699 Erkrath (DE)
(86) Internationale Anmeldenummer: PCT/EP1999/008532
(87) Internationale Veröffentlichungsnummer: WO 2000/029502

(56) Entgegenhaltungen:
- EP-A- 0 324 887
- EP-A- 0 625 563
- EP-A- 0 652 271
- WO-A-90/14402
- WO-A-95/30818
- DE-A- 3 419 415
- DE-A- 19 647 598
- GB-A- 2 283 036

## Beschreibung

Die vorliegende Erfindung betrifft die Verwendung von Partialglyceriden der Tallölfettsäure als Schmiermittel in Bohrspülmitteln für den Erdreichaufschluß.

Flüssige Spülsysteme zur Niederbringung von Gesteinsbohrungen unter Aufbringen des abgelösten Bohrkleins sind bekanntlich beschränkt eingedickte, fließfähige Systeme, die einer der drei folgenden Klassen zugeordnet werden können: Rein-wäßrige Bohrspülflüssigkeiten, Bohrspülsysteme auf Ölbasis, die in der Regel als sogenannte Invert-Emulsionsschlämme eingesetzt werden und Zubereitungen vom Typ der W/O-Emulsionen, bei denen die wäßrige Phase heterogen fein-dispers in der geschlossenen Ölphase verteilt ist. Die dritte Klasse der bekannten Bohrspülflüssigkeiten ist auf Wasser-basierten O/W-Emulsionen aufgebaut, d.h. auf Flüssigsystemen. die in einer geschlossenen wäßrigen Phase eine heterogene, feindisperse Ölphase enthalten.

Neben den Basis-Bestandteilen einer Spülung, also Wasser und/oder Öl enthalten derartige Systeme noch eine Vielzahl weiterer Inhaltsstoffe, die für die Gebrauchseigenschaften essentiell sind. Dazu gehören beispielsweise Beschwerungsmittel, in der Regel Bariumsulfat ("Baryt"), die der Spülung die notwendige Dichte verleiht. Weiterhin werden wasserlösliche Salze, in der Regel Calciumchlorid, zugesetzt, um einen osmotischen Ausgleich zwischen Formationswasser und der Bohrspülung zu verhindern. Um stabile Emulsionen zu erhalten werden in der Regel auch geeignete Emulgatoren zugesetzt. Weiterhin können Korrosionsinhibitoren, die Viskosität regulierende Additive, fluid-loss-Additive, Alkalireserven und auch Schmiermittel enthalten sein.

Die Klasse der rein wasserbasierten Spülsysteme reicht in der geschichtlichen Entwicklung der hier betroffenen Arbeitsmittel am weitesten in die Vergangenheit zurück. Ihr Einsatz ist jedoch mit so ausgeprägten Defiziten verbunden. daß bis heute für technisch anspruchsvolle Bohrungen die Anwendbarkeit stark eingeschränkt ist. Insbesondere die Interaktion der wäßrigen Bohrspülflüssigkeit mit zu erbohrenden wassersensitiven Erdreichschichten - insbesondere entsprechenden Tonschichten - führt zu nicht akzeptablen Belastungen des Bohrprozesses.
In jüngster Vergangenheit wird allerdings ein älterer Vorschlag wieder aufgegriffen, der auch in hoch sensitiven shale-Formationen zu hinreichender Stabilität bei Einsatz rein wasserbasierter Spülsysteme führen kann. Hierbei handelt es sich um den Einsatz entsprechender Systeme auf Basis löslicher Alkalisilikate, die auch als Wassergläser beziehungsweise Wasserglas-basierte Systeme bekannt sind. Verwiesen wird beispielsweise auf die der Öffentlichkeit zugängliche Vortragsveranstaltung "THE PREVENTION OF OIL DISCHARGE FROM DRILLING OPERATIONS", 18./19. Juni 1996, Aberdeen, veranstaltet von IBC Technical Services, London, sowie insbesondere auf die in diesem Zusammenhang erschienenen Veröffentlichungen M. Eigner "FIELD TRIALS WITH A SILICATE DRILLING FLUID IN SHELL-EXPRO", sowie I. WARD und B. Williamson "SILICATE WATER BASED MUDS - A SIGNIFICANT ADVANCE IN WATER BASED DRILLING FLUID TECHNOLOGY".

Das Arbeiten mit rein wasserbasierten Systemen insbesondere der zuletzt genannten Art macht allerdings die Mitverwendung von Komponenten mit Schmiermittelwirkung wünschenswert. Für den praktischen Einsatz sind eine Vielzahl von Schmiermitteln bekannt. Dazu zählen Mineralöle, tierische und pflanzliche Öle sowie Ester. Die zunehmend strengeren Bestimmungen bezüglich der biologischen Abbaubarkeit von Bohrspülsystemen bzw. deren Inhaltsstoffen lassen die Verwendung der ansonsten gut geeigneten Mineralöle immer seltener zu. Gleichzeitig wächst das Interesse an biologisch besser abbaubaren Alternativen, insbesondere an Estern. Die EP 0 770 661 zum Beispiel beschreibt Ester von Monocarbonsäuren mit einwertigen Alkoholen als geeigneten Schmiermittel für wasserbasierte Bohrspülsysteme. Konkret wird allerdings nur ein 2-Ethylhexyloleat als geeignetes Schmiermittel für silikathaltige wäßrige Spülungen offenbart. Die DE 196 47 598 der Anmelderin beschreibt C₁₂₋₃₀-Fettalkohole und deren Abmischung mit Fettsäureestern als geeignete Schmiermittel für rein wasserbasierte, silikathaltige Bohrspülungen. Als Ester werden auch Triglyceride von Fettsäuren genannt. Es ist bekannt, daß insbesondere Carbonsäureestern zum Zweck des Erdreichaufschlusses eine besonders ausgeprägte Schmiermittelwirkung zukommt, von der in vielfacher Weise Gebrauch gemacht wird. Ihr Einsatz in wasserbasierten Systemen und insbesondere in vergleichsweise hochalkalischen Wasserglassystemen kann jedoch zu beträchtlichen Schwierigkeiten führen. Durch Esterspaltung können als Sekundärproduktc Komponenten mit starker Tendenz zur Schaumbildung entstehen, die dann unerwünschte Probleme in das Spülsysteme einführen. Die zuvor erwähnte Veröffentlichung von I. Ward et al. verweist ausdrücklich auf diese hier bestehende Schwierigkeit.

Weiterhin werden in der Praxis Sulfonate von pflanzlichen Ölen, insbesondere das Sojaölsulfonat, als Schmiermittel eingesetzt. Sojaölsulfonat kann in wasser- und ölbasierten Systemen eingesetzt werden, es zeigt aber insbesondere bei wasserbasierten Spülungen ein deutliches Schäumen, was die Gebrauchseigenschaften einschränkt.

Der vorliegenden Erfindung lag daher die Aufgabe zugrunde ein Schmiermittel sowohl für wasser- als auch ölbasierte Bohrspülsystemen bereitzustellen, daß die oben genannten Nachteile nicht aufweist. Weiterhin sollte das Schmiermittel auch bei niedrigen Temperaturen einsetzbar sein, die beispielsweise bei Bohrspülmitteln, die in arktischen Gebieten eingesetzt und gelagert werden, auftreten können. Es wurde nun gefunden, daß bestimmte ausgewählte Fettsäurepartialglyceride die gewünschten Eigenschaften aufweisen.

In einer ersten Ausführungsform wird daher die Verwendung von Partialglyceriden von Tallölfettsäuren beansprucht, wobei die Partialglyceride gegebenenfalls in Abmischung mit anionischen Tensiden vorliegen, als Schmiermittel in solchen Bohrspülmitteln für den Erdreichaufschluß, die Wasser und gegebenenfalls eine separate Ölphase enthalten, beansprucht.

Es hat sich als vorteilhaft erwiesen, solche Partialglyceride auszuwählen, deren Pour-Point - gemessen nach DIN ISO 3016 - höchstens 10 °C, vorzugsweise höchstens 0 °C beträgt.

Der Anteil an Triglyceriden liegt bei den erfindungsgemäß eingesetzten Partialglyceriden unter 15 Gew.-%, vorzugsweise unter 10 Gew.-% und insbesondere unter 5 Gew.-%.

In der Regel werden Mischungen aus Mono- und Diglyceriden verwendet, wobei jeweils etwa 40 bis 50 Gew.-% an Mono- und Diglyceriden enthalten sind. Der an 100 Gew.-% fehlende Anteil besteht aus Triglycerid.

Je nach Art der Fettsäuremischung können die Partialglyceride auch untergeordnete Anteile an gesättigten Fettsäureresten aus der Gruppe der gesättigten C₁₆₋₂₄-Fettsäuren enthalten. Beansprucht ist die Verwendung von Partialglyceriden der Tallölfettsäuren, einer Mischung aus 45 bis 65 Gew.-% Linol- und konjugierten C₁₈-Fettsäuren, 25 bis 45 Gew.-% Ölsäure, 5 bis 12 Gew.-% 5,9,12-Octadecatriensäure und 1 bis 3 Gew.-% gesättigter Fettsäuren (nach Römpps Chemie Lexikon, 9. Auflage, Band 6, Seite 4484, 1992). Tallölfettsäuren werden destillativ aus Tallöl gewonnen und anschließend großtechnisch mit Glycerin verestert.

Die Partialglyceride können erfindungsgemäß sowohl in wasserbasierten als auch in ölbasierten Bohrspülsystemen als Schmiermittel verwendet werden. Wasserbasierte Systeme enthalten in der Regel als Basisflüssigkeit nur Wasser, vorzugsweise mehr als 90 Vol. %. Gegebenenfalls können aber auch wasserunlösliche Öle in Mengen von 1 bis 10 Volumen-% enthalten sein, die eine separate Ölphase ausbilden. Diese Spülungen liegen dann in der Regel als Öl-in-Wasser Emulsion vor, wobei es in diesen Fällen bevorzugt ist, geeignete Emulgatoren einzusetzen. Bei den ölbasierten Systemen besteht die flüssige Phase der Spülung zu mehr als 10 Vol.-% aus wasserunlöslichen Ölen. Bevorzugte Volumenverhältnisse zwischen Öl und Wasser liegen bei 90/10 bis 60/40. Derartige Systeme bilden, gegebenenfalls unter Mitverwendung von geeigneten Emulgatoren, Wasser-in-Öl Emulsionen aus.

Die Partialglyceride eignen sich als Schmiermittelkomponente sowohl für die wasserbasierten- als auch für die ölbasierten Spülungen. Insbesondere bei wasserbasierten Spülungen führt die Verwendung der Partialglyceride zu einer deutlich verringerten Schaumbildung, was wiederum die Einstellung von Viskosität und Dichte in der Praxis erleichtert, da bei schäumenden Systemen eine genaue Messung und Einstellung der Dichte nur schwer möglich ist. Die Partialglyceride können aber auch vorteilhaft als Schmiermittel in ölbasierten Systemen eingesetzt werden und führen auch hier zu einer deutlichen Reduzierung der Reibungskoeffizienten, insbesondere unter Druckeinwirkung.

Die Partialglyceride werden in dem erfindungsgemäßen Verfahren den Bohrspülungen in Mengen von 0,5 bis 5 Gew.-%, bezogen auf die gesamte Bohrspülung zugesetzt. Bevorzugt ist die Verwendung in Mengen zwischen 0,5 und 3 Gew.-%, insbesondere in Mengen von 1 bis 3 Gew.-%. Je nach Anwendungssituation und Spülungssystem kann es während der eigentlichen Bohrung notwendig sein, das Schmiermittel nachzudosieren.

Die Partialglyceride werden erfindungsgemäß als Schmiermittel in Bohrspülungen verwendet, die Wasser sowie gegebenenfalls ein wasserunlösliches Öl in Form einer separaten Ölphase enthalten. Dieses wasserunlösliche Öl ist vorzugsweise ausgewählt aus der Gruppe der
a) Ester aus einwertigen gesättigt oder ungesättigten, linearen oder verzweigten Alkoholen mit 1 bis 24 Kohlenstoffatomen und einwertigen gesättigt oder ungesättigten, linearen oder verzweigten Fettsäuren mit 1 bis 24 Kohlenstoffatomen,
b) Ein- und mehrwertige, lineare oder verzweigte Alkohole mit 6 bis 36 Kohlenstoffatomen
c) Mineralöl, Dieselöl, Paraffinöl
d) Lineare Alpha-Olefine und deren Derivate sowie interne Olefine
e) Kohlensäureester

Während Mineral- und Dieselöle sowie die Paraffinöle, insbesondere solche mit 14 bis 16 C-Atomen, seit langem bekannte Ölphasen für Bohrspülungen darstellen, wurden in den letzten Jahren zunehmend ökologisch verträgliche Alternativen entwickelt. Aufgrund ihrer guten biologischen Abbaubarkeit sind insbesondere die Ester eine auch in der Praxis erprobte Alternative zu den reinen Kohlenwasserstoffen geworden. Geeignete Esteröle sind in den europäischen Patenten der Anmelderin EP 0 374 671, EP 0 374 672, EP 0 386 638, EP 0 386 636 sowie EP 0 535 074 beschrieben. Deren Offenbarung ist auch Teil der vorliegenden Erfindung. Auch bestimmte wasserunlösliche Alkohole sind geeignete Öle für die hier betroffenen Bohrspülsysteme. Vorzugsweise werden mehrwertige, insbesondere zweiwertige Alkohole eingesetzt. Es ist auch möglich wasserlösliche Alkohole mit nicht-wasserlöslichen Lösungsmitteln. insbesondere Fettsäureestern. zu mischen und diese Mischung als Ölphase zu verwenden. Die Anmelderin hat diese Klasse von Verbindungen ausführlich in ihren europäischen Schutzrechten EP 0 391252 und EP 0 472 558 beschrieben. Eine weitere Gruppe von geeigneten Ölen stellen die linearen Alpha-Olefine und deren Derivate, insbesondere Poly-Alpha-Olefine (PAO), dar. Geeignete Verbindungen dieses Typs werden beispielsweise in der internationalen Offenlegungsschrift WO 95/34610 beschrieben. Auch interne Olefine können als Öle im Sinne der vorliegenden Anmeldung verwendet werden. Weiterhin können Kohlensäureester, wie sie in der EP 0 532 570 der Anmelderin beschrieben werden, geeignete Basisöle für die hier betroffenen Bohrspülsysteme sein. Es ist prinzipiell möglich die oben genannten Öle allein oder in jeder beliebigen Mischung einzusetzen. Besonders bevorzugt sind dabei solche Bohrspülsysteme, bei denen ökologisch verträgliche Basisöle, insbesondere Ester oder Alkohole oder deren Mischungen eingesetzt werden.

Wasserbasierte Bohrspülflüssigkeiten und die darin einzusetzenden Zusatzstoffe wie Beschwerungsmittel, fluid-loss-Additive, Alkalireserven, Viskositätsregler und dergleichen sind Gegenstand umfangreicher allgemeiner Literatur und einschlägiger Patentliteratur. Ausführliche Sachinformationen finden sich hier beispielsweise in dem Fachbuch George R. Gray und H.C.H. Darley "Composition in Properties of Oil Well Drilling Fluids", 4. Auflage, 1980/81, Gulf Publishing Company, Houston und die umfangreiche darin zitierte Sach- und Patentliteratur sowie das Handbuch "Applied Drilling Engineering", Adam T. Borgoyne, Jr. et al., First Printing Society of Petroleum Engineers, Richardson, Texas (USA).

Das auch durch die erfindungsgemäße Lehre angesprochene Gebiet der wasserbasierten Silikatspülungen ist ebenfalls allgemeines Fachwissen, vgl. insbesondere die eingangs zitierten, hierauf bezogenen Veröffentlichungen. Als Alkalisilikate kommen insbesondere wasserlösliches Natriumsilikat und/oder wasserlösliches Kaliumsilikat mit Modulwerten (Molverhältnis von SiO₂ zu Na₂O beziehungsweise K₂O) von 1,0 bis 3,3, vorzugsweise von 1.5 bis 2,5 in Betracht. Bevorzugte Konzentrationen der Alkalisilikate in den wasserbasierten Flüssigkeiten liegen bei maximal etwa 10 Gew.-%, vorzugsweise in einem etwas niedrigerem Bereich z.B. von etwa 3 bis 8 Gew.-% und insbesondere im Bereich von etwa 4 bis 7 Gew.-%. Zusammen mit den Alkalisilikaten sind üblicherweise hohe Konzentrationen löslicher nichtreaktiver Salze in den wasserbasierten Flüssigphasen vorgesehen. Insbesondere kommen hier Alkalichloride und dabei Natriumchlorid und/oder Kaliumchlorid in Betracht. Entsprechend Salz-gesättigte wäßrige Silikatspülungen sind in der Praxis bevorzugte Arbeitsmittel. Die pH-Werte dieser Flüssigphasen sind vergleichsweise im stark alkalischen Bereich und liegen oberhalb pH 10 und insbesondere bei wenigstens pH 11. Es ist diese hier geschilderte Klasse von hochalkalischen Silikatspülungen, in denen sich die erfindungsgemäßen Schmiermittel als Zusatz in geringen Mengen von beispielsweise 1 bis 3 Gew.-% - bezogen auf Gesamtspülung - als besonders wirkungsvoll erwiesen haben. Für den heute wieder interessant gewordenen technischen Einsatz dieser rein wasserbasierten Systeme kann durch die Mitverwendung geringster Mengen an organischen Komponenten, die im Sinne der Erfindung ausgewählt sind, eine substantielle Leistungssteigerung eingestellt werden, wie sie für die Mitverwendung von Komponenten mit Schmiermittelwirkung in wasserbasierten Systemen prinzipiell bekannt ist. Weiterhin können die erfindungsgemäßen Schmiermittel auch in wasserbasierten Spülungen eingesetzt werden die Glykole, insbesondere Ethylenglykol, Propylenglykol oder Butylenglykol und deren Polymere enthalten. Solche dem Fachmann als Glykolspülungen bekannten Systeme enthalten bis zu 30 Gew.-% der oben genannten Glykole. Es ist auch möglich die Schmiermittel in wasserbasierten Spülungen einzusetzen, die Silikaten und Glykole enthalten.

Bohrspülungen auf Ölbasis werden im allgemeinen als sogenannte Invert-Emulsionsschlämme eingesetzt, die aus einem Dreiphasen-system bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud", Journal of Petroleum Technology, 1984, 975 bis 981 sowie die darin zitierte Literatur. Besonders bevorzugte Emulgatorensysteme für den Einsatz in Invert-Bohrspülsystemen werden in der DE 196 43 840 beschrieben, deren Offenbarung auch Teil der vorliegenden Anmeldung ist.

Neben der Verwendung von Partialglyceriden hat es sich als vorteilhaft erwiesen, zusätzlich noch oberflächenaktive Verbindungen aus der Klasse der anionischen Tenside mitzuverwenden. Hier kommt insbesondere den Sulfonaten und Sulfaten besondere Bedeutung zu. Geeignet sind beispielsweise C₉₋₁₃ Alkylbenzolsulfate, Olefinsulfate, C₁₂₋₁₈ Alkansulfate, alpha-Sulfofettsäuren, Alkylsulfate, Alkoholsulfate und Ethersulfate sowie Alkylsulfobemsteinsäure. Vorzugsweise werden erfindungsgemäß Sulfonate von Fettsäuren mit 12 bis 24 C-Atomen, insbesondere mit 12 bis 14 C-Atomen verwendet. Bevorzugt wird auch sulfatiertes Ricinusöl als anionisches Tensid eingesetzt. Im Fall daß anionische Tenside mit verwendet werden, werden diese in Mengenverhältnissen Aniontenside : Partialglyceriden von 1 : 10 bis 1 : 20 eingesetzt.

Die erfindungsgemäße Verwendung von ausgewählten Partialglyceriden in Bohrspülungen führt sowohl in wasser- als auch in ölbasierten Systemen zu einer verringerten Reibung. In wasserbasierten Bohrspülungen tritt kein schädliches Schäumen auf. Die Partialglyceride sind auch bei niedrigen Temperaturen einsetzbar und biologisch abbaubar. Außerdem sind die erfindungsgemäß verwendeten Partialglyceride in aquatischen Systemen nicht toxisch.

### Beispiele

In den folgenden Beispielen wurde die Schmierwirkung von Wasser- und Ölbasierten Spülungen bei unterschiedlicher Druckbelastung mit Hilfe des Almen-Wieland-Tests gemessen.

Es wurden die folgenden Bohrspülsysteme (I) und (II) untersucht:

| (I) Wasserbasierte Spülung | | (II) Ölbasierte Spülung (O/W-Verhältnis 75/25) | |
|---|---|---|---|
| Wasser | 4 1 | Mineralöl | 675 ml |
| XC-Polymer | 20 g | Wasser | 225 ml |
| Bentonit | 56 g | CaCl₂ | 95 g |
| CMC LVT | 40 g | Emulgator | 35 g |
| Baryt | 1755 g | Fluid Loss Additiv | 10 g |
| | | Viskositätsbildner | 25 g |
| | | Lime | 17g |
| | | Baryt | 360 g |

Zu den Spülungen wurden jeweils 1,5 Gew.-% Schmiermittel zugegeben. Als Schmiermittel wurden untersucht:
a) Sojaölsulfonat Vergleichsversuch
b) Glycerinmonotalloat (Pour-Point: - 15 °C, Verseifungzahl: 155, Säurezahl: 1, Jodzahl: 120, OH-Zahl 255)
c) eine Kombination aus Glycerinmonotalloat mit sulfatiertem Rizinusöl.

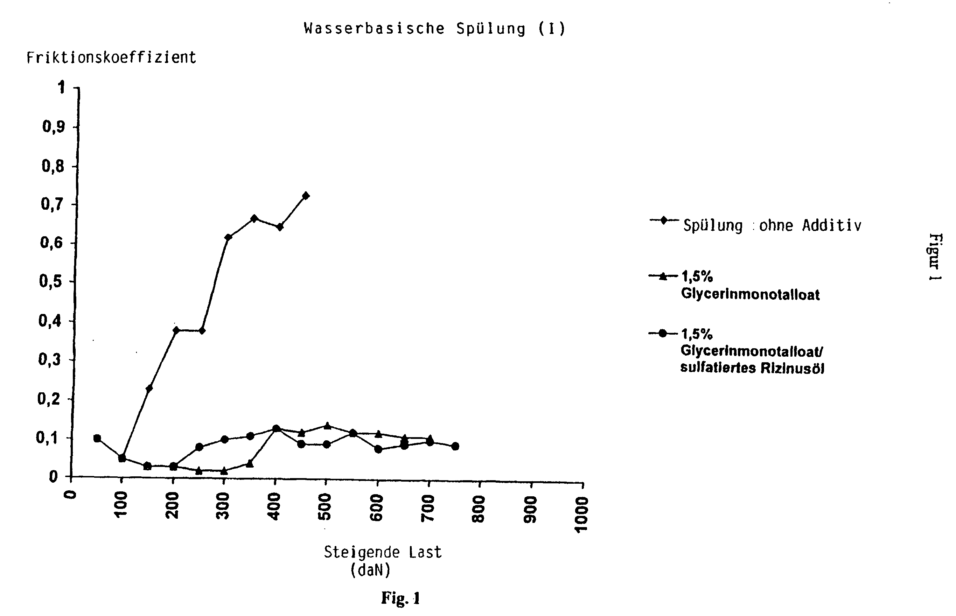

Die Graphen in der **Figur 1** geben den Friktionskoeffizient der wasserbasierten Spülung (I) bei unterschiedlicher Druckbelastung wieder. Als Vergleich wurde eine Spülung ohne Schmiermittel ("blank mud") untersucht. Man erkennt, daß die erfindungsgemäße Verwendung von Partialglyceriden b) zu sehr guten Schmiereigenschaften der Spülung führen, insbesondere im unteren Lastbereich. Gleichzeitig zeigen die erfindungsgemäßen Spülungen praktisch keine Schaumentwicklung.

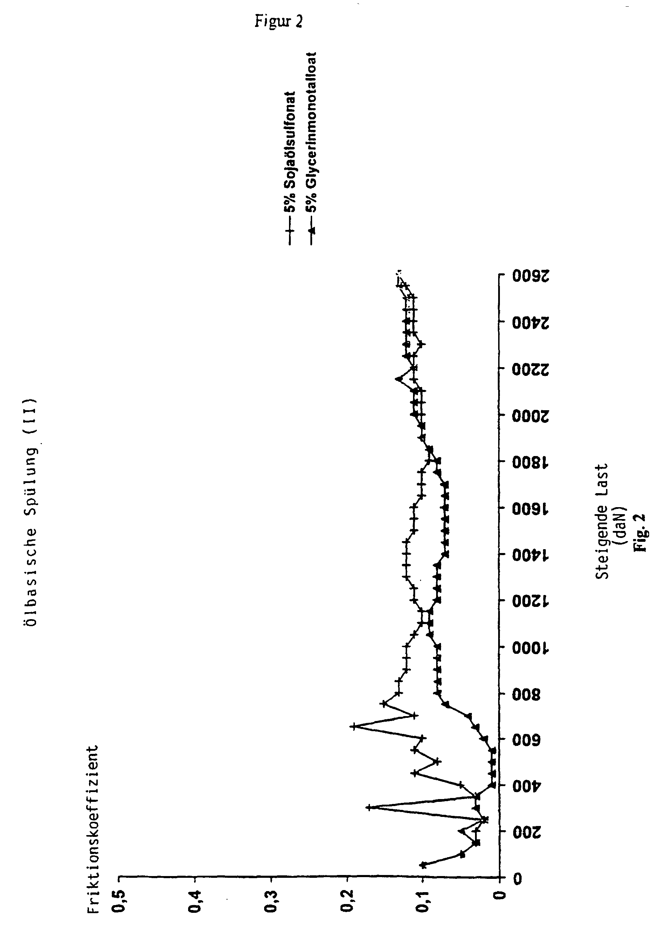

In den Graphen der **Figur 2** werden die Messergebnisse für die ölbasierte Spülung (II) gegen die schmierstofffreie Spülung bzw. eine Kombination aus b) mit c) wiedergegeben. Auch hier erkennt man, daß die Verwendung von Partialglyceriden zu einer deutlichen Verringerung der Reibung führt.

## Patentansprüche

1. Verwendung von Mono- und/oder Diglyceriden der Tallölfettsäure, wobei der Anteil an Triglyceriden unter 15 Gew.-% liegt, ggf. in Abmischung mit anionischen Tensiden, als Schmiermittel in Bohrspülmitteln für den Erdreichaufschluss, die Wasser und ggf. eine separate Ölphase enthalten.

2. Verwendung nach Anspruch 1, **dadurch gekennzeichnet, dass** Partialglyceride mit einem Pour-Point - gemessen nach DIN ISO 3061 - von höchstens 10 °C ausgewählt sind.

3. Verwendung nach Anspruch 1 oder 2, **dadurch gekennzeichnet, dass** Partialglyceride mit einem Pour-Point - gemessen nach DIN ISO 3061 - von höchstens 0 °C ausgewählt sind.

4. Verwendung nach einem der Ansprüche 1 bis 3, **dadurch gekennzeichnet, dass** solche Bohrspülungen verwendet werden, die das Schmiermittel in Mengen von 1 bis 3 Gew.-%, bezogen auf die gesamte Bohrspülung, enthalten.

5. Verwendung gemäß einem der Ansprüche 1 bis 4, **dadurch gekennzeichnet, dass** die Schmiermittel in Bohrspülmitteln verwendet werden, die zu mehr als 90 Vol.-% Wasser enthalten.

6. Verwendung gemäß einem der Ansprüche 1 bis 5, **dadurch gekennzeichnet, dass** die Schmiermittel in Bohrspülmitteln verwendet werden, die zu mehr als 10 Vol.-% ein wasserunlösliches Öl enthalten.

7. Verwendung nach einem der Ansprüche 1 bis 6, **dadurch gekennzeichnet, dass** die Schmiermittel in Bohrspülmitteln verwendet werden, die nichtwasserlösliche Öle, ausgewählt aus den Gruppen
a) Ester aus einwertigen gesättigt oder ungesättigten, linearen oder verzweigten Alkoholen mit 1 bis 24 Kohlenstoffatomen und einwertigen gesättigt oder ungesättigten, linearen oder verzweigten Fettsäuren mit 1 bis 24 Kohlenstoffatomen,
b) Ein- und mehrwertige, lineare oder verzweigte Alkohole mit 6 bis 36 Kohlenstoffatomen
c) Mineralöl, Dieselöl, Paraffinöl
d) Lineare Alpha-Olefine und deren Derivate sowie interne Olefine
e) Kohlensäureester
enthalten.

8. Verwendung nach einem der Ansprüche 1 bis 7, **dadurch gekennzeichnet, dass** die Partialglyceride in Kombination mit Sulfonaten von C₁₂₋₂₄-Fettsäuren verwendet werden.

## Claims

1. The use of mono- and/or diglycerides of tall oil fatty acid, the percentage content of triglycerides being below 15% by weight, optionally in admixture with anionic surfactants, as lubricants in drilling fluids for geological exploration which contain water and optionally a separate oil phase.

2. The use claimed in claim 1, **characterized in that** partial glycerides with a pour-point - as measured to DIN ISO 3061 - of at most 10°C are selected.

3. The use claimed in claim 1 or 2, **characterized in that** partial glycerides with a pour point - as measured to DIN ISO 3061 - of at most 0°C are selected.

4. The use claimed in any of claims 1 to 3, **characterized in that** drilling fluids containing the lubricant in quantities of 1 to 3% by weight, based on the drilling fluid as a whole, are used.

5. The use claimed in any of claims 1 to 4, **characterized in that** the lubricants are used in drilling fluids which contain more than 90% by volume of water.

6. The use claimed in any of claims 1 to 5, **characterized in that** the lubricants are used in drilling fluids which contain more than 10% by volume of a water-insoluble oil.

7. The use claimed in any of claims 1 to 6, **characterized in that** the lubricants are used in drilling fluids which contain water-insoluble oils selected from the group consisting of
a) esters of monohydric saturated or unsaturated, linear or branched alcohols containing 1 to 24 carbon atoms and monobasic saturated or unsaturated, linear or branched fatty acids containing 1 to 24 carbon atoms,
b) mono- and polyhydric, linear or branched alcohols containing 6 to 36 carbon atoms,
c) mineral oil, diesel oil, paraffin oil,
d) linear alpha-olefins and derivatives thereof and internal olefins,
e) carbonic acid esters.

8. The use claimed in any of claims 1 to 7, **characterized in that** the partial glycerides are used in combination with sulfonates of C₁₂₋₂₄ fatty acids.

## Revendications

1. Utilisation de mono- et/ou de diglycérides d'acide gras de tallol dans lesquels selon la proportion de triglycérides se situe en dessous de 15 % en poids, le cas échéant en mélange avec des agents tensioactifs anioniques, comme lubrifiants dans des produits de rinçage pour forages, destinés à désagréger le terrain, et contenant de l'eau et le cas échéant une phase huileuse séparée.

2. Utilisation selon la revendication 1,
**caractérisée en ce que**
l'on choisit des glycérides partiels ayant un point d'écoulement - mesuré selon la norme DIN ISO 3061 - d'au plus 10°C.

3. Utilisation selon la revendication 1 ou 2,
**caractérisée en ce que**
que l'on choisit des glycérides partiels ayant un point d'écoulement - mesuré selon la norme DIN ISO 3061 - d'au plus 0°C.

4. Utilisation selon l'une des revendications 1 à 3,
**caractérisée en ce qu'**
on utilise des produits de rinçage pour forages qui contiennent le lubrifiant en quantités de 1 à 3 % en poids, par rapport à l'ensemble du produit de rinçage pour forages.

5. Utilisation selon l'une des revendications 1 à 4,
**caractérisée en ce qu'**
on utilise les lubrifiants dans des produits de rinçage pour forages qui contiennent jusqu'à plus de 90 % en volume d'eau.

6. Utilisation selon l'une des revendications 1 à 5,
**caractérisée en ce qu'**
on utilise les lubrifiants dans des produits de rinçage pour forages qui contiennent jusqu'à plus de 10 % en volume d'une huile insoluble dans l'eau.

7. Utilisation selon l'une des revendications 1 à 6,
**caractérisée en ce qu'**
on utilise les lubrifiants dans des produits de rinçage pour forages qui contiennent des huiles insolubles dans l'eau choisies dans les groupes suivants :
a) des esters provenant d'alcools monovalents linéaires ou ramifiés, saturés ou insaturés, comportant de 1 à 24 atomes de carbone et d'acides gras monovalents linéaires ou ramifiés, saturés ou insaturés, comportant de 1 à 24 atomes de carbone,
b) des alcools mono- et polyvalents linéaires ou ramifiés comportant de 6 à 36 atomes de carbone,
c) des huiles minérales, diesel, paraffiniques,
d) des alpha-oléfines linéaires et leurs dérivés ainsi que des oléfines internes,
e) des esters d'acide carbonique.

8. Utilisation selon l'une des revendications 1 à 7,
**caractérisée en ce qu'**
on utilise les glycérides partiels en combinaison avec des sulfonates d'acides gras en C₁₂ à C₂₄.
